# EUROPEAN PATENT SPECIFICATION

(11) **EP 0 944 300 B1**
(45) Date of publication and mention of the grant of the patent: **25.06.2003**
(21) Application number: 97944015.3
(22) Date of filing: 06.10.1997
(51) Int. Cl.: A01F 29/00, A01F 25/20, A01D 87/12

(54) **BALE HANDLING APPARATUS**
GROSSBALLENHANDLUNGSGERÄT
DISPOSITIF DE MANUTENTION DE BALLES

(30) Priority: 04.10.1996 GB 9620701
(43) Date of publication of application: 29.09.1999
(73) Proprietor: Cestrian Inspiration Limited, Cheshire CW6 9RH (GB)
(72) Inventor: HUGHES, Michael, John, Cheshire CH3 9NU (GB)
(74) Representative: Geoffrey Owen & Company
(86) International application number: GB9702731
(87) International publication number: WO98015168

(56) References cited:
- EP-A- 0 014 154
- EP-A- 0 087 588
- DE-A- 3 313 227
- US-A- 5 333 799
- US-A- 5 367 932

## Description

Recently there has been a significant increase in the use of large, high density bales, e.g. of straw, silage, hay and the like, which can weigh as much as 500kg. Such bales provide advantages for merchants and hauliers, in that 25% more weight can be carried on the same vehicles and in addition the bales may be handled mechanically under the control of one person as opposed to requiring two or three people to load and unload bales of other types.

In order to utilise such large, high density bales, it is possible to use a chopper/blower which shreds the bale as it is fed into the machine and then blows the chopped material for several metres into the area where it is to be utilised.

Such chopper/blowers may well prove to be economically viable where a great deal of material is required every day, but the cost of the machine is normally not justified where much smaller amounts of material are used. In such cases, a bale is placed in a yard, the binding strings are cut and then the material is removed and dispersed manually.

The mechanised chopper/blowers also suffer from a number of further disadvantages. They either require a loader or material handler to load the bale into the machine or it is necessary to present the bale individually on the ground to enable the machine to load itself. In either case, an additional piece of machinery is required to manoeuvre a bale into the correct position for loading. Also, the known machines have additional tractor units to drive them which cut and pulverise the bale at high speed, thereby generating considerable pneumatic force which blows the shredded material in the general desired direction. The resultant dust and shredded material which is generated is a serious health hazard both to livestock and to farming personnel.

Reference is also made to EP-A-0 014 154 which discloses a tractor-drawn apparatus for collecting and transporting materials, comprising a channel having a movable wall acting as a scraping shovel for vertical or oblique engagement and pivotally mounted at the end of an articulated arm. The apparatus comprises further an open end of the channel, displacement means and attachment means.

It is an object of the present invention to provide a bale handling apparatus which is less costly than the known bale handlers and which permits distribution of material from the bale without producing excessive dust.

In accordance with the present invention, there is provided a bale handling apparatus comprising a bale-receiving channel having a base defined by a bale support for engagement with the undersurface of a bale and two opposed side walls located one on either side of the bale support, an open end defined between the opposed side walls at one end of the bale support for loading and discharging a bale, displacement means for displacing the bale in a controlled manner off the bale support and out of the bale-receiving channel through said open end and attachment means for attachment to lifting means of a vehicle.

By displacing the bale gradually off the bale support, those flakes/wafers of the bale no longer supported by the support surface tend to break off from the rest of the bale and can thereafter be used in the conventional manner. The present invention thus enables a whole bale to be discharged piecemeal, but without producing potentially harmful dust. The present invention also results in a 25% increase in straw utilisation because the straw is not shredded.

The bale support may comprise a substantially smooth plate upon which the bale can slide, preferably by use of hydraulic forces.

One suitable bale displacement means comprises means for fixedly securing a cut end of one or more bale bindings and pulling the other end of the or each bale binding, thereby discharging the bale gradually using the bindings (which have to be removed in any case before the bale can be used). In one embodiment the free end of the or each binding is wound onto a driven rotatable drum member. In another embodiment the free end of the or each binding is releasably securable to one of a series of clamps forming part of an endless conveyor.

In another embodiment the bale is pushed along the bale support by a movable wall/gate which engages an end face of the bale and which is displaceable by means of fluid pressure, e.g. hydraulically.

Alternatively, the bale support may itself be movable in order to displace a bale supported on it. For example, the bale support may be formed by the upper surface of an endless conveyor which is actuated in one direction to displace the bale and in the opposite direction to assist loading of the bale onto the apparatus.

The apparatus may additionally comprise means for shredding portions of the bale as they are displaced off the bale support. This may be in the form of a rotatable roughened (e.g. spiked/tined) beater which is actuated during discharge of the bale to break up the discharged portions of the bale. The beater is preferably movable out of the path of the bale when desired.

The apparatus preferably also comprises an enclosed end wall and an open end wall, the bale being discharged via the open end wall.

The apparatus may also be provided with attachment means (e.g. mounting brackets) for connection to a vehicle, e.g. to lifting arms of a farm vehicle such as (a) the rear 3-point linkage of a tractor, (b) a fore-end loader or (c) a material handler. The displacement means (and the beater means, if fitted) can then be conveniently driven by the hydraulics of the vehicle to which it is connected.

The apparatus may also further comprise means for increasing the length of the bale support, for example by providing a slide member which is releasably positionable beyond the bale support, to increase the distance over which loosened portions of the bale can be discharged.

The apparatus may be also be arranged with its longitudinal axis mounted transversely (either permanently or temporarily) to the forward direction of the supporting vehicle the transverse mounting results in improved stability and reduces the likelihood of over balancing. In one embodiment the apparatus is pivotable between an "end-on" position (for facilitating loading) and a transverse position for handling and discharging a bale.

By way of example only, specific embodiments of the present invention will now be described, with reference to the accompanying drawings, in which:-
Fig. 1 is a perspective view of a first embodiment of bale handling apparatus in accordance with the present invention, fitted to a fore-end loader tractor;
Fig. 2 is a perspective view of the discharge end of the apparatus of Fig. 1;
Fig. 3 is a perspective view of a second embodiment of bale handling apparatus in accordance with the present invention;
Fig. 4 is a perspective view of a third embodiment of bale handling apparatus in accordance with the present invention;
Fig. 5 is a perspective view of a fourth embodiment of bale handling apparatus in accordance with the present invention;
Fig. 6 illustrates a modification which can be used with any of the bale handling apparatus illustrated in Figs. 1 to 5.
Fig. 7 illustrates a modification which does not form part of the present invention;
Figs. 8a to 8d illustrate a third modification which can be applied to all of the aforementioned embodiments;
Fig. 9 is a perspective view from one end of a fifth embodiment of bale handling apparatus in accordance with the present invention; and
Fig. 10 is a perspective view from the opposite end of the embodiment of Fig. 9.

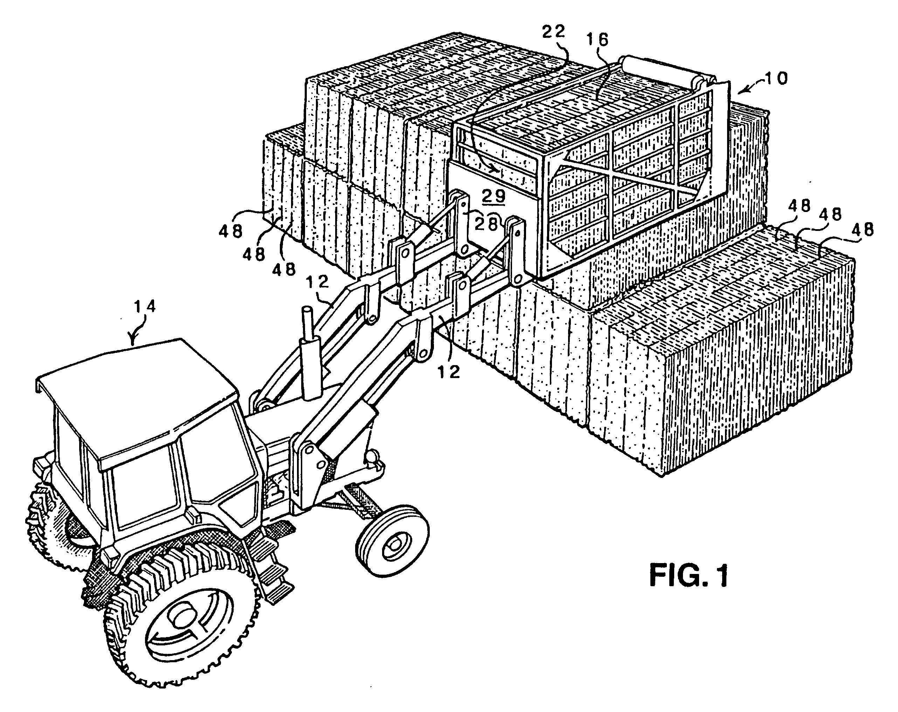

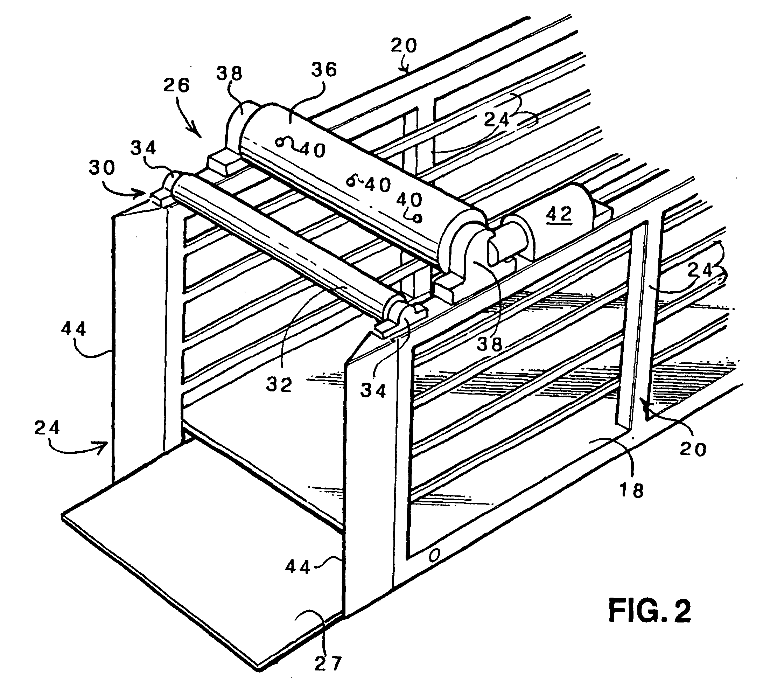

Referring firstly to Figs. 1 and 2, a bale handling apparatus 10 is fitted to the conventional hydraulically actuated lifting arms 12 of a fore-end loader tractor 14. The apparatus is intended to stack, unstack and discharge large cuboid bales 16 (typically high density straw bales of approximate dimensions up to 8ft x 4ft x 4ft). The apparatus is in the form of a framework of generally cuboidal shape having a generally flat, planar base plate 18 for supporting a bale, two parallel side walls 20 extending perpendicularly to the base, a first, closed end wall 22 and an open end 24. The side walls 20 and the closed end wall 22 may be solid but are preferably, as illustrated, formed from a lattice of framework members 24 in order to reduce weight. The apparatus also comprises a discharge mechanism 26 (to be explained more fully herein after) for discharging a bale gradually from the open end 24 and an inclined guide plate 27 extending from beneath the planar support plate 18 out of the open end of the apparatus.

The apparatus is releasbly securable to the hydraulic arms 12 of the tractor 14. by means of mounting brackets 28 and a mounting plate 29 secured to the closed end wall 22.

The discharge mechanism comprises a first guide roller assembly 30 comprising a transversely extending cylindrical tube 32 whose opposite ends are rotatably mounted on respective cylindrical lugs 34 secured to the upper edges of respective side walls 20. The mechanism further comprises a hollow winding roller 36 whose opposite ends are rotatably mounted in bearings 38 secured to the upper edges of respective side walls 20. The winding roller 36 is provided with a plurality of apertures 40 for receipt of an end of a respective bale binding (as will be explained) and is rotatable in both directions by means of a hydraulic motor 42 secured to the upper edge of one of the side walls 20.

In use, when it is desired to stack bales the tractor 14 and its hydraulically actuated lifting arms 12 are manipulated so as to position the open end 24 of the framework adjacent to a longitudinal end of a bale to be handled. By moving the tractor 14 forwards the bale is thereby pushed into the framework along the planar base plate 18 of the apparatus. Location of a longitudinal end of a bale within the apparatus is facilitated by the inclined guide plate 28 and by the formation of the vertical edges 44 of the side walls adjacent to the open end of the frame into tapered bale dividers.

Once located within the apparatus the bale can then be transported to the desired location. The bale can then be discharged from the apparatus intact by inclining the framework by suitable manipulation of the lifting arms of the tractor. The bale remains intact since, as illustrated in Fig. 1, the bales comprise a series of compacted "flakes" or laminae of densely packed straw which are held together in the manner of a laminate by means of several (generally 4 to 6) plastics bale bindings extending around the periphery of the bale along the two longitudinal end faces and the upper and lower faces of the bale.

When it is desired to discharge a portion of the bale in order to use the straw, the bale is first loaded into the apparatus as described previously. The bindings are then severed at around the midpoint of the end face of the bale adjacent to the open end 24 of the apparatus. The upper end of each of the bindings is then passed over the roller 32 and secured in a respective aperture 40 in the winding roller 36 and the lower end of the binding is fixedly secured to the apparatus, for example by tying the ends to respective hooks located on the undersurface of the support plate 18 between the plate 18 and the guide plate 28. In this condition, the bale is thus no longer bound by the bindings but is still held intact by the framework of the apparatus.

In order to discharge a portion of the bale from the apparatus, the hydraulic motor 42 is actuated to wind the bindings onto the winding roller 36. Since the opposite ends of the bindings are fixedly secured to the apparatus, winding the bindings onto the winding roller causes the bale to be displaced towards the open end 24 of the apparatus. Those portions of the bale approaching the remote edge of the guide plate 28 thus tend to break off from the remainder of the bale and can thereafter be used. The bale will normally be discharged at a considerable height so that the action of the discharged portions of the bale falling onto the ground will tend to break up the portions into less densely packed straw matter.

By controlling the degree to which the bindings are wound onto the winding roller 36, the amount of straw dispensed can be controlled fairly accurately.

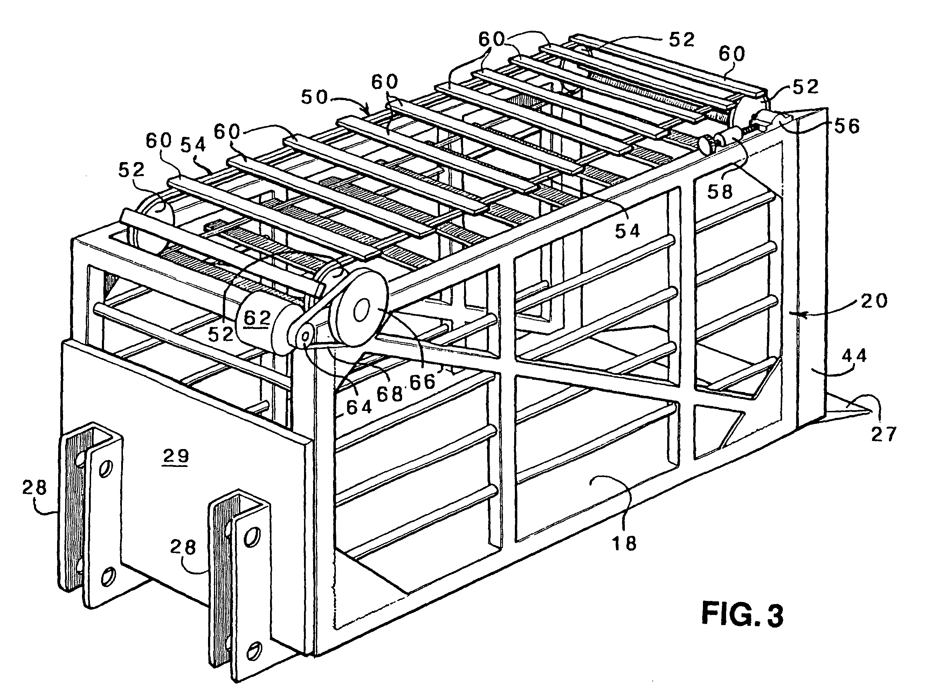

The embodiment illustrated in Fig. 3 is a variant of the embodiment illustrated in Fig. 1. The framework is virtually identical to that shown in Figs. 1 and 2 and like parts have been given like reference numerals and will not be described further. The only significant difference concerns the mechanism for discharging the bale from the apparatus.

One disadvantage with the apparatus of Fig. 1 is that once the bale has been fully discharged it is then necessary to actuate the hydraulic motor 42 in the opposite direction in order to unwind the bindings from the winding roller 36 before the apparatus can be used with another bale. This can be inconvenient and time-consuming. Thus, in the embodiment illustrated in Fig. 3, the winding roller 36 is replaced with an endless conveyor 50 located on the top face of the framework. The conveyor comprises four pinions 52, each being located at a respective comer of the upper surface of the side walls 20 and two parallel endless chains 54, each chain being entrained round two of the pinions connected to a respective side wall. The pinions 52 are mounted on the side walls by means of bearings 56 and the position of the bearings 56 adjacent to the open end 24 of the frame is adjustable by means of a screw-threaded adjustment member 58.

A plurality of elongate clamps 60 extend between, and are secured to, the two chains 54 and are aligned perpendicularly to the longitudinal direction of the framework. The conveyor is driven by means of a hydraulic motor 62 secured to an upper comer of the closed end wall 22 and transfers its output from a sprocket 64 to a sprocket 66 connected to an adjacent pinion 52 by means of a further chain 68.

The manoeuvring of a bale into and out of the second embodiment is identical to that for the first embodiment. However, the discharge of the bale from the framework is significantly different. As for the first embodiment, the bale bindings are cut adjacent to the open end 24 of the framework and the lower portions of the free ends of the bindings are secured beneath the base plate 18. The upper ends of the bindings are then clamped to the nearest longitudinal clamp 60, such that the spacing of the clamped bindings is virtually identical to the spacing of the bindings on the bale. In order to discharge the bale gradually from the framework the hydraulic motor 62 is actuated whereupon the conveyor is moved, thereby gradually pulling an increasing length of the bindings from the bale and thereby causing the bale to be discharged from the open end 24 of the framework.

However, in contrast to the first embodiment, when the bale has been fully discharged there is no need to actuate the conveyor in reverse to "unwind" the bindings from the conveyor; since all that is necessary is the release of the bindings from the appropriate clamp 60 to which the bindings are secured, whereupon the bindings can then be removed. The bindings of the next bale can then simply be secured to the nearest clamp 60. This offers a significant advantage in time and effort as compared with the first embodiment, in which it is necessary to "unwind" the bindings from the roller 36.

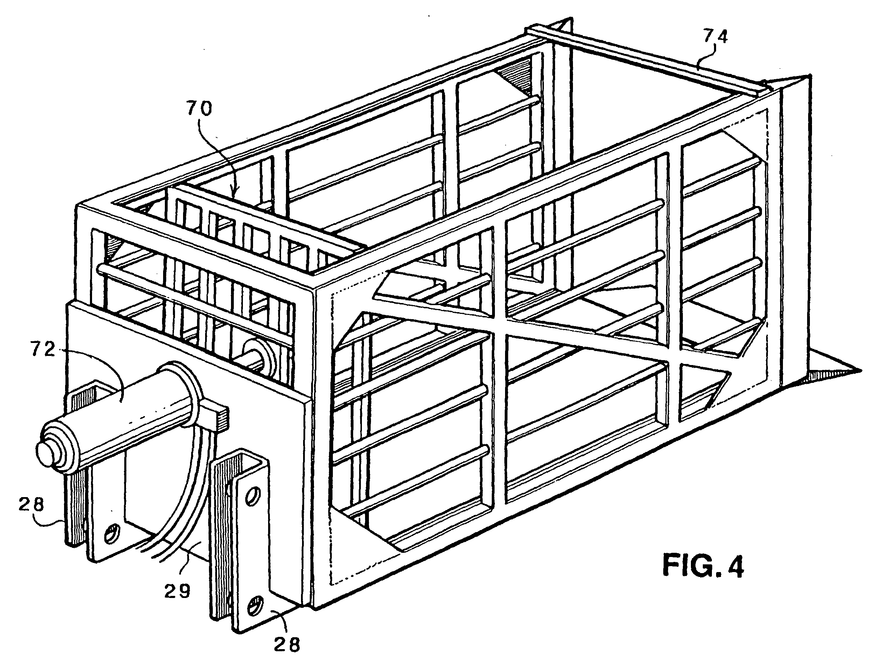

The third embodiment is illustrated in Fig. 4. As for the second embodiment, the framework is virtually identical to that shown in Figs. 1 and 2 (but without any bulky headstock) and like parts have been given like reference numerals and will not be described further. As for the second embodiment, the only significant difference concerns the mechanism for discharging the bale from the apparatus.

In the third embodiment shown in Fig. 4, instead of discharging the bale by use of the bindings, the bale is discharged by means of a retractable gate or wall 70 (formed by a plurality of intersecting bars) which is displaceable in the longitudinal direction of the frame by means of a multi-stage hydraulic ram 72 secured to the closed end wall 22 of the frame.

The bale is loaded into the framework as for the first and second embodiments. However, in order to discharge the bale from the framework it is not necessary to utilise the bindings. Instead, the discharging gate 70 is retracted to its fullest extent (as illustrated in Fig. 4) and the bale is then loaded. The binding strings or tapes are then severed adjacent to the open end 24 of the framework. The hydraulic ram 70 is then actuated to displace the gate 72 longitudinally along the base plate 18 of the framework and thereby gradually displace the bale out of the framework. As for the first two embodiments, as the bale is displaced portions of the bale overhang the end of the framework and break off from the remainder of the bale.

The only other significant difference between this embodiment and that of the first two embodiments, is the provision of a reinforcing strut 74 extending transversely between the upper ends of the side walls 20 adjacent to the open end 24 of the framework, to provide the rigidity which was previously provided by the rollers 26, 30 of the first embodiment and the conveyor apparatus of the second embodiment.

Although a hydraulic ram 70 is described for displacing the gate, other means could be used, such as endless chains extending along either side of the framework, worm drives connected to the gate or small hydraulic rams operating on a ratchet mechanism or a system of hydraulic rams and chains.

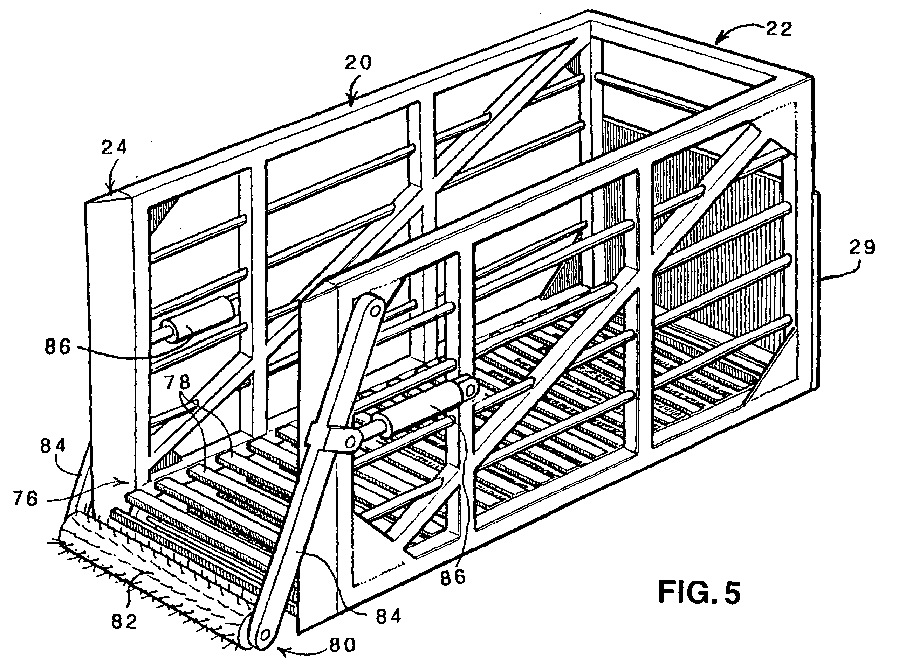

The fourth embodiment, illustrated in Fig. 5, is again a variant of the embodiment illustrated in Fig. 1. The framework is virtually identical to that shown in Figs. 1 and 2 (but without any bulky headstock) and like parts have been given like reference numerals and will not be described further. Again, the only significant difference concerns the mechanism for discharging the bale from the apparatus.

It will be noted that the smooth planar base plate 18 for supporting the bales is replaced with a conveyor mechanism 76 comprising a plurality of transversely extending support bars 78 mounted between two endless chains (not visible in the drawings) entrained about respective sprockets (also not visible) located at either end of the framework. The conveyor is actuated by a hydraulic motor (not illustrated) similar to the hydraulic motor 62 of Fig. 3.

It will also be noted that the open end 24 of the frame is provided with a shredding attachment 80. The shredding attachment comprises a spiked roller or beater 82, each end of which is pivotally attached to one end of a respective pivot arm 84, the opposite end of each pivot arm being pivotally connected to a respective side wall 20 of the framework. The pivot arms 84 are pivotable between a first position illustrated in Fig. 5 in which the beater is located slightly below the end of the conveyor adjacent the open end 24 of the framework and an inoperative position in which hydraulically actuated rams 86 are extended in order to pivot the beater upwardly out of the path of the bale.

The beater is rotatable in both directions by means of a hydraulic motor (not visible in the Figures). Also, it will be noted that the plate 28 of the previous embodiments has been dispensed with.

In use, a bale is located on the framework in much the same way as for the previous embodiments. However, it will be appreciated as the bale is loaded, the conveyor can be operated in reverse in order to facilitate the loading of the bale onto the framework. This can be further facilitated by rotating the spiked beater 82 in the reverse direction, in order to assist the loading of the bale onto the conveyor and into the framework. Alternatively, the spiked beater may be pivoted out of the way by extension of the rams 86.

When it is desired to discharge a portion of the bale from the framework the conveyor is actuated in the forward direction, thus causing the bale to be displaced along the framework. Preferably, the spiked beater 82 will be in the lowermost position (illustrated in Fig. 5) and will be actuated to rotate rapidly as the bale is advanced, thereby loosening the densely compacted bale into less densely packed straw material and propelling it off the platform, which is more suitable for use. Alternatively, if loosening of the compacted bale is not required the spiked beater may be pivoted out of path of the bale by extending the rams 86.

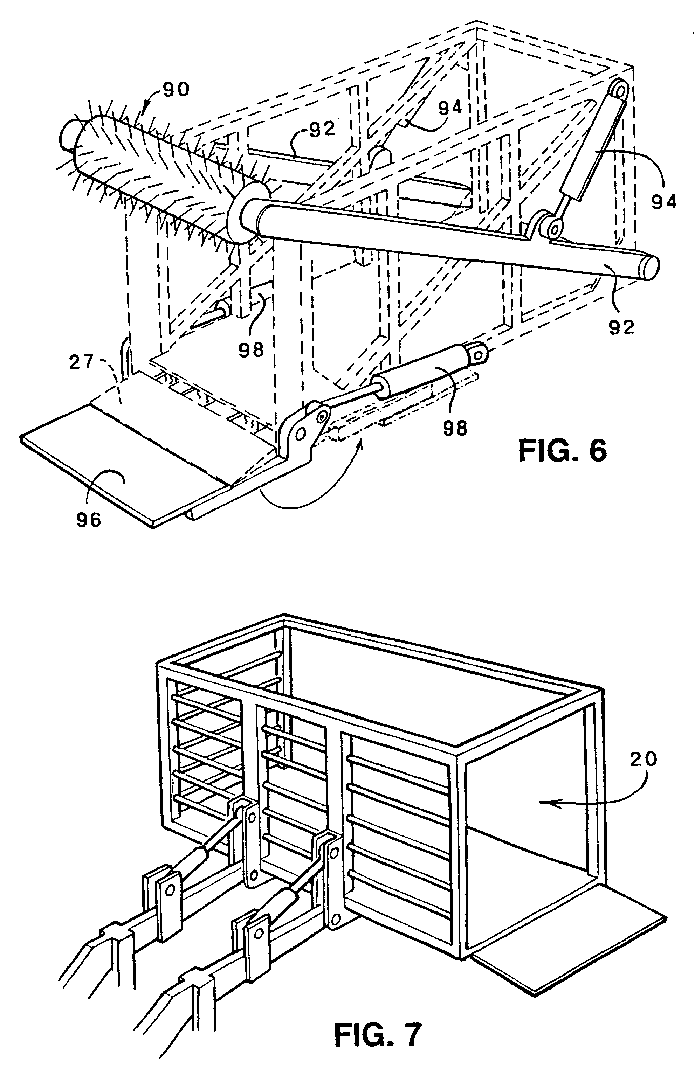

Fig. 6 illustrates a modification which can be used with any of the previous or following embodiments. It is applicable to any of the embodiments and thus the framework has only been drawn in a general sense in dotted lines. The modification is the addition of a spiked beater 90 pivotally mounted between the free ends of each of two pivot arms 92, the other end of each of the pivot arms being pivotally mounted to the rearmost lower comer of a respective side wall 20. The arms and the spiked beater are pivotable by means of two hydraulic rams 94 extending between the rearmost upper comer of each of the side walls and a respective one of the pivot arms. The spiked beater itself is driven by a hydraulic motor. As the bale is discharged gradually from the framework, the hydraulic motor for the roller can be actuated in order to loosen and propel the compacted bale between the spiked beater and the guide plate 27 as it is discharged, thereby placing it in a form more suitable for use.

As for the fourth embodiment, the spiked beater 90 may also be pivoted into the path of a bale to be loaded and actuated in the reverse direction, in order to facilitate the loading of the bale into the framework.

Fig. 6 also illustrates a flat plate 96 which is pivotally mounted to the lower end of each of the front frame uprights and pivotable 180° between the position shown in full lines (where it is located beyond and immediately below the end of the guide plate 27) and the position shown in chain dot (where it is withdrawn beneath the apparatus) by means of two double - acting hydraulic rams 98. By positioning the plate 96 beyond the end of the guide plate 27, the loosened portions of the bale may be discharged at a greater distance. The plate 96 is pivoted to the position shown in chain dot for bale loading.

Fig. 7 shows a modification which does not form part of the present invention. The main difference is that the longitudinal axis of the apparatus is rotated through 90° so that it lies transversely with respect to the forward direction of the vehicle. It will also be noted that one of the long walls 20 of the frame work is left open.

The transverse mounting of the apparatus reduces the likelihood of overbalancing and/or allows a heavier load to be carried. The open long wall 20 of the framework permits a bale to be loaded "side-on" as opposed to end-on.

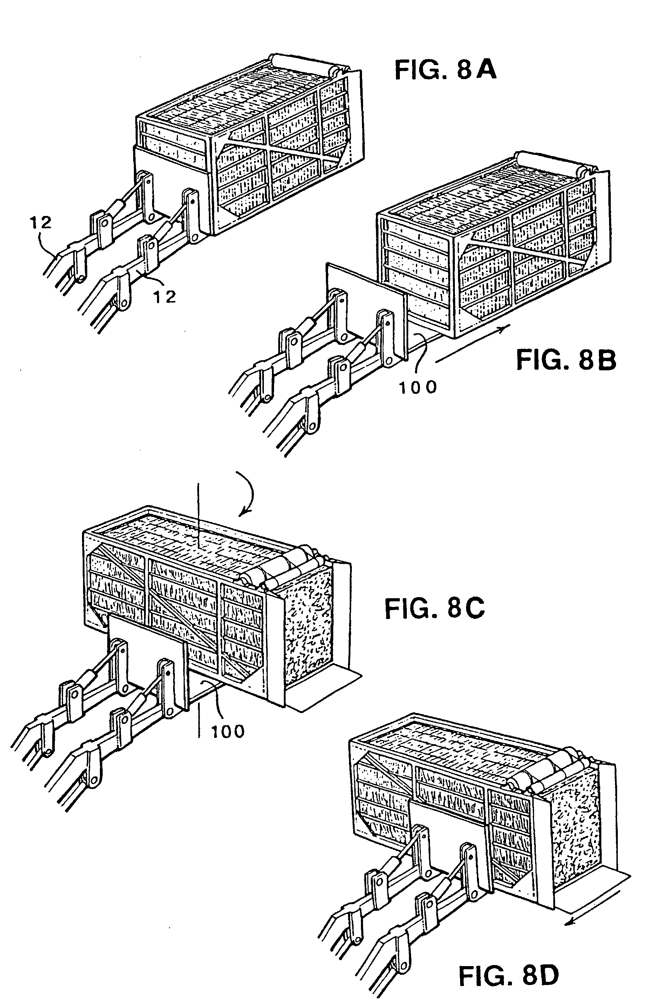

A further modification is illustrated in Figs. 8a to 8d. Although the transverse mounting of Fig. 7 greatly improves stability, loading the bales through the open long wall 20 can be more troublesome. The modification of Fig. 8 overcomes any such problems by mounting the framework translationally and pivotably on a base 100 supported by the tractor arms 12 or the like. The framework is displaceable from a loading position (Fig. 8a) in which its longitudinal axis is aligned with the forward direction of the tractor or the like, to an extended position (Fig. 8b) from which it is pivotable through 90° (Fig. 8c) and then retractable (Fig. 8d). This enables a bale to be loaded "end-on" (Fig. 8a) but to be handled and discharged "side-on" (Fig. 8d). The loading of bales is thus facilitated whilst affording the advantages of stability of a transverse mounting.

The adjustability of the discharge mechanism also allows the equipment to be manoeuvred between and through farm buildings.

Moreover, the transverse discharge afforded by the embodiments of Fig. 7 and Fig. 8 facilitates the discharge of material along sheds and feeding fences. The material can be discharged as the tractor advances along the sheds or feeding fences, thereby discharging material evenly and continuously into the desired areas.

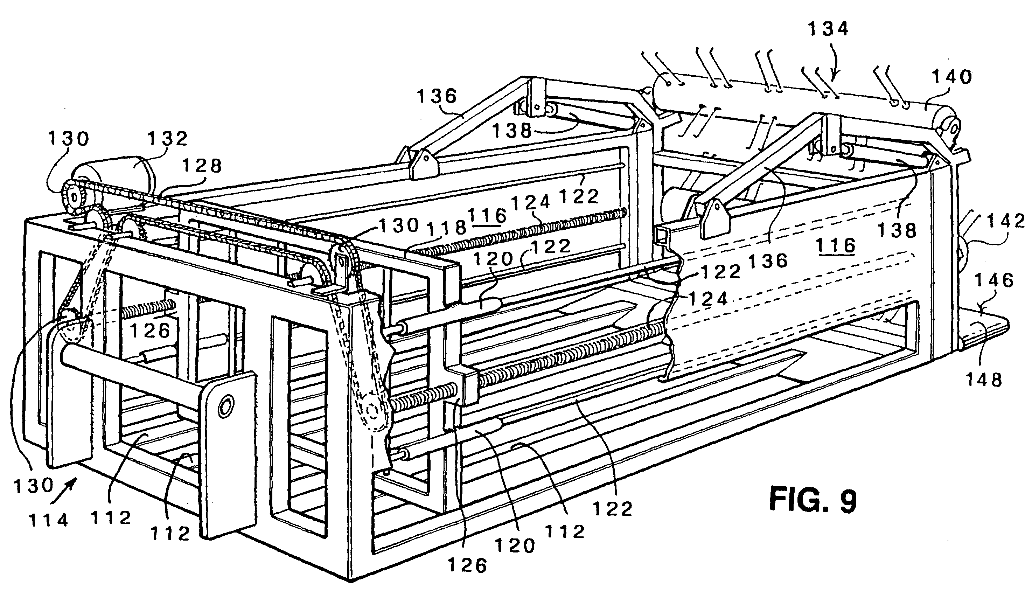

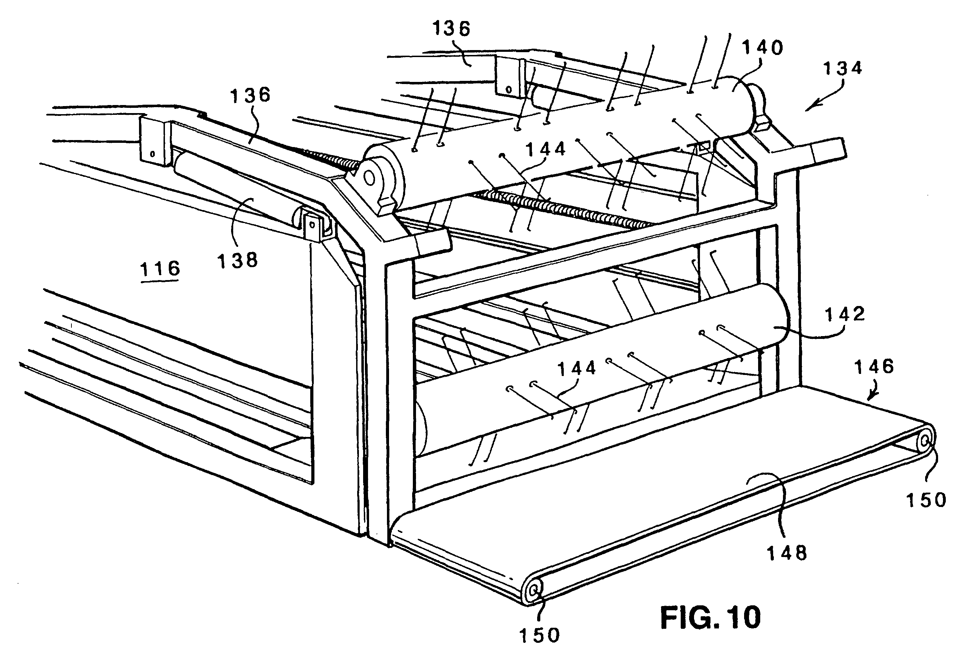

A further embodiment is illustrated in Figs. 9 and 10. In general terms it is very similar to a number of the earlier embodiments. The bale handling apparatus comprises a bale support surface in the form of the upper planar surface of each of four parallel beams 112 extending longitudinally between a rear wall 114 and an open (discharge) end of the apparatus. As in previous embodiments, two longitudinal side walls 116 extend upwardly with respect to the base.

The apparatus further comprises a movable generally planar wall or gate 118. The wall or gate is slidably mounted on the side walls of the frame by means of two tubular sleeves 120 welded to each of the two vertical edges, each sleeve being slidably disposed on a respective longitudinally extending cylindrical guide rod 122, whereby the wall or plate is slidably guided in the longitudinal direction of the apparatus and retained such that its plane is substantially normal to its direction of movement.

Between each pair of two longitudinally extending cylindrical guide rods 122 on each wall of the apparatus is disposed a longitudinal screw member 124, each of which is screw threadedly engaged with a respective lug 126 located on the adjacent upwardly extending edge of the wall or gate 118 between the two sleeves 120. Since the wall or gate is slidably disposed with respect to the longitudinally extending guide rods, rotation of the two longitudinal screw members and engagement with the corresponding lugs 126 forms two worm drives, by means of which the wall or gate can be displaced forwardly or rearwardly. It will be noted that the two longitudinal helical screw members 124 are driven by a common chain 128 via sprockets 130, the chain being driven from a hydraulic motor 132, to ensure that the two longitudinal screw members 124 rotate at the same speed.

It will also be noted that the front (discharge) end of the apparatus is provided with an agitating means and spreading facilitator 134. The agitating means is mounted on two arms 136 which are pivoted at one end to the approximate mid-point of the upper edge of the side walls 116 and which are displaceable upwardly by means of two hydraulic rams 138. The agitating means further comprises upper and lower drums 140, 142, each of which is provided with a plurality of spring-loaded tines 144. The upper and lower drums are driven by means of a common chain from a single hydraulic motor, whereby the drums are adapted to rotate in the same direction or opposite directions at the same speed. Alternatively, the drums may be arranged to rotate at different speeds.

Also connected to the lower portion of the arms is a discharge conveyor 146. This comprises an endless conveyor belt 148 which passes around two rollers 150. The conveyor may be operated in either direction, as desired, whereby portions of a bale which are fed from the apparatus into the agitating means may be discharged transversely, in either direction, if desired.

In use, before a bale is loaded, the agitating means 134 and conveyor 146 are moved out of the way by extending the two hydraulic rams 138, thereby pivoting the two arms 136 upwardly. A bale is then loaded into the framework as for the earlier embodiments. The hydraulic rams 138 are then retracted whereby the agitating means and conveyor are moved into the position illustrated in Figs. 9 and 10. The apparatus is then actuated. The forward displacement of the bale, the rotation of the upper and lower drums and the speed of the discharge conveyor are all matched to ensure a steady discharge of material at a desired rate.

The invention is not restricted to the details of the foregoing embodiments.

## Claims

1. A bale handling apparatus (10) comprising a bale-receiving channel having a base (18) defined by a bale support for engagement with the undersurface of a bale (16) and two opposed side walls (20) located one on either side of the bale support, an open end (24) defined between the opposed side walls at one end of the bale support for loading and discharging a bale, displacement means (70) for displacing the bale in a controlled manner off the bale support and out of the bale-receiving channel through said open end (24) and attachment means (28) for attachment to lifting means (12) of a vehicle.

2. A bale handling apparatus as claimed in claim 1, wherein the bale displacement means (70) comprises a movable member which engages an end face of the bale.

3. A bale handling apparatus as claimed in claim 2, wherein the movable member (70) comprises a generally planar body.

4. A bale handling apparatus as claimed in claim 3, wherein the planar body comprises a movable wall or gate (70).

5. A bale handling apparatus as claimed in any of claims 2 to 4, wherein the bale displacement means further comprises one or more worm drives (124) for displacing the movable member.

6. A bale handling apparatus as claimed in claim 5, comprises two worm drives (124), located on opposite sides of the apparatus.

7. A bale handling apparatus as claimed in claim 1, wherein the bale displacement means comprises means (36, 40) for fixedly securing a cut end of one or more bale bindings (48) and for pulling the other end of the or each bale binding.

8. A bale handling apparatus as claimed in claim 7, wherein the free end of the or each binding (48) may be wound onto a driven rotatable drum member (36).

9. A bale handling apparatus as claimed in claim 7, wherein the free end of the or each binding is releasably securable to one of a series of clamps (60) forming part of a conveyor apparatus (50).

10. A bale handling apparatus as claimed in any of the preceding claims, wherein the bale support comprises a substantially smooth plate (18) upon which the bale can slide.

11. A bale handling apparatus as claimed in any of claims 1 to 9, wherein the bale support comprises a plurality of spaced-apart support members (112).

12. A bale handling apparatus as claimed in claim 11, wherein the support members (112) extend in the direction of displacement of the bale.

13. A bale handling apparatus as claimed in any of claims 1 to 9, wherein the bale support (18) is movable in order to displace a bale supported by it.

14. A bale handling apparatus as claimed in claim 13, wherein the bale support comprises the upper surface of a conveyor apparatus (76).

15. A bale handling apparatus as claimed in claim 14, wherein the conveyor apparatus (76) is operable in both directions.

16. A bale handling apparatus as claimed in any of the preceding claims, wherein the bale-receiving channel is elongate.

17. A bale handling apparatus as claimed in claim 16; wherein the longitudinal axis of the bale-receiving channel is transverse to the forward direction of a vehicle (14) upon which it is mounted.

18. A bale handling apparatus as claimed in claim 16, wherein the longitudinal axis of the bale-receiving channel is parallel to the forward direction of a supporting vehicle (14) upon which it is mounted.

19. A bale handling apparatus as claimed in claim 16, in which the apparatus (10) is adjustable between a first position (Fig 8A) in which the longitudinal axis of the bale-receiving channel is parallel to the forward direction of a supporting vehicle (14) upon which it is mounted and a second position (Fig: 8D) in which the longitudinal axis of the bale-receiving channel is transverse to the forward direction of the supporting vehicle (14).

20. A bale handling apparatus as claimed in any of the preceding claims, further comprising a wall (22) at one end of the channel and a discharge opening (24) at the opposite end.

21. A bale handling apparatus as claimed in any of the preceding claims, wherein the edges (44) of the side walls (20) adjacent to the open end (24) wall are tapered.

22. A bale handling apparatus as claimed in any of the preceding claims, wherein the bale support (18) is elongate.

23. A bale handling apparatus as claimed in any of the preceding claims, further comprising attachment means for connection to a vehicle.

24. A bale handling apparatus as claimed in any of the preceding claims, further comprising means (27) for increasing the effective length of the bale support (18).

25. A bale handling apparatus as claimed in claim 24, comprising a slide member (96) which is releasably positionable beyond the bale support surface.

26. A bale handling apparatus as claimed in claim 25, wherein the slide member (96) is pivotally mounted.

27. A bale handling apparatus as claimed in any of the preceding claims, further comprising agitating means (134) for breaking up and/or propelling portions of a bale as they are displaced off the bale support (112).

28. A bale handling apparatus as claimed in claim 27, wherein the agitating means (112) is displaceable into and out of the path of a bale.

29. A bale handling apparatus as claimed in claim 27 or claim 28, wherein the agitating means (112) comprises a rotatable member (140, 142) having projecting portions (144).

30. A bale handling apparatus as claimed in any of claims 27 to 29, further comprising a plurality of agitating means (134).

31. A bale handling apparatus as claimed in claim 30, comprising a first agitating means (134) adapted to engage the upper portion of a bale and a second agitating means (134) adapted to engage the lower portion of a bale.

32. A bale handling apparatus as claimed in any of the preceding claims, further comprising means (146) for directing material displaced from the bale support.

33. A bale handling apparatus as claimed in claim 32, further comprising a conveyor (146) located adjacent to the discharge end of the bale support.

34. A bale handling apparatus as claimed in claim 33, wherein the direction of movement of the conveyor (146) is transverse to the direction of the movement of the bale.

35. A bale handling apparatus as claimed in claim 33 or claim 34, wherein the conveyor (146) is operable in two directions.

36. A bale handling apparatus as claimed in any of claims 33 to 35, wherein the conveyor (146) comprises an endless conveyor.

37. A bale handling apparatus as claimed in any of the preceding claims, wherein the apparatus (10) is actuated hydraulically.

38. A bale handling apparatus as claimed in any of the preceding claims, wherein the attachment means (28) for attachment to lifting means is located at the opposite end of the bale support from the aperture for loading and discharging the bale.

## Patentansprüche

1. Ballenhandhabungsgerät (10), umfassend: einen Ballenaufnahmekanal mit einem Grundteil (18), der durch einen Ballenhalter für Eingriff mit der Unterfläche eines Ballens (16) und zwei gegenüberliegende Seitenwände (20) definiert wird, von denen eine auf jeder Seite des Ballenhalters angeordnet ist, ein offenes Ende (24), das zwischen den gegenüberliegenden Seitenwänden an einem Ende des Ballenhalters zum Aufladen und Entladen eines Ballens definiert ist, ein Verschiebungsmittel (70) zum Verschieben des Ballens in einer gesteuerten Weise von dem Ballenhalter hinunter und aus dem Ballenaufnahmekanal hinaus durch das genannte offene Ende (24), und Befestigungsmittel (28) zur Befestigung an Hubmitteln (12) eines Fahrzeugs.

2. Ballenhandhabungsgerät nach Anspruch 1, bei dem das Ballenverschiebungsmittel (70) ein bewegbares Element aufweist, das eine Endfläche des Ballens ergreift.

3. Ballenhandhabungsgerät nach Anspruch 2, bei dem das bewegbare Element (70) einen allgemein ebenen Körper aufweist.

4. Ballenhandhabungsgerät nach Anspruch 3, bei dem der ebene Körper eine bewegbare Wand oder ein bewegbares Tor (70) aufweist.

5. Ballenhandhabungsgerät nach einem der Ansprüche 2 bis 4, bei dem das Ballenverschiebungsmittel weiter einen oder mehrere Schneckenantriebe (124) zum Verschieben des bewegbaren Elements aufweist.

6. Ballenhandhabungsgerät nach Anspruch 5, das zwei Schneckenantriebe (124) aufweist, die auf gegenüberliegenden Seiten des Geräts angeordnet sind.

7. Ballenhandhabungsgerät nach Anspruch 1, bei dem das Ballenverschiebungsmittel Mittel (36, 40) zum stabilen Befestigen eines abgeschnittenen Endes eines oder mehrerer Ballenumbindungen (48) und zum Ziehen des anderen Endes der oder jeder Ballenumbindung aufweist.

8. Ballenhandhabungsgerät nach Anspruch 7, bei dem das freie Ende der oder jeder Umbindung (48) auf ein angetriebenes, drehbares Trommelelement (36) gewickelt werden kann.

9. Ballenhandhabungsgerät nach Anspruch 7, bei dem das freie Ende der oder jeder Umbindung lösbar an einer einer Reihe von Klemmen (60) befestigt werden kann, die Teil einer Fördereinrichtung (50) bilden.

10. Ballenhandhabungsgerät nach einem der vorhergehenden Ansprüche, bei dem der Ballenhalter eine im wesentlichen glatte Platte (18) aufweist, auf der der Ballen gleiten kann.

11. Ballenhandhabungsgerät nach einem der Ansprüche 1 bis 9, bei dem der Ballenhalter eine Mehrzahl beabstandeter Halteelemente (112) aufweist.

12. Ballenhandhabungsgerät nach Anspruch 11, bei dem die Halteelemente (112) sich in der Verschiebungsrichtung des Ballens erstrecken.

13. Ballenhandhabungsgerät nach einem der Ansprüche 1 bis 9, bei dem der Ballenhalter (18) bewegbar ist, um einen durch ihn gehaltenen Ballen zu verschieben.

14. Ballenhandhabungsgerät nach Anspruch 13, bei dem der Ballenhalter die obere Oberfläche einer Fördereinrichtung (76) aufweist.

15. Ballenhandhabungsgerät nach Anspruch 14, bei dem die Fördereinrichtung (76) in beiden Richtungen betrieben werden kann.

16. Ballenhandhabungsgerät nach einem der vorhergehenden Ansprüche, bei dem der Ballenaufnahmekanal länglich ist.

17. Ballenhandhabungsgerät nach Anspruch 16, bei dem die Längsachse des Ballenaufnahmekanals quer zu der Vorwärtsrichtung eines Fahrzeugs (14) ist, an dem es angebracht ist.

18. Ballenhandhabungsgerät nach Anspruch 16, bei dem die Längsachse des Ballenaufnahmekanals parallel zu der Vorwärtsrichtung eines Haltefahrzeugs (14) ist, an dem es angebracht ist.

19. Ballenhandhabungsgerät nach Anspruch 16, bei dem das Gerät (10) zwischen einer ersten Position (Fig. 8A), in der die Längsachse des Ballenaufnahmekanals parallel zu der Vorwärtsrichtung eines Haltefahrzeugs (14) ist, an dem es angebracht ist, und einer zweiten Position (Fig. 8D) einstellbar ist, in der die Längsachse des Ballenaufnahmekanals quer zu der Vorwärtsrichtung des Haltefahrzeugs (14) ist.

20. Ballenhandhabungsgerät nach einem der vorhergehenden Ansprüche, das ferner eine Wand (22) an einem Ende des Kanals und eine Abgabeöffnung (24) an dem entgegengesetzten Ende aufweist.

21. Ballenhandhabungsgerät nach einem der vorhergehenden Ansprüche, bei dem die Ränder (44) der Seitenwände (20) angrenzend an die Wand mit offenem Ende (24) verjüngt sind.

22. Ballenhandhabungsgerät nach einem der vorhergehenden Ansprüche, bei dem der Ballenhalter (18) länglich ist.

23. Ballenhandhabungsgerät nach einem der vorhergehenden Ansprüche, das ferner Befestigungsmittel zur Verbindung mit einem Fahrzeug aufweist.

24. Ballenhandhabungsgerät nach einem der vorhergehenden Ansprüche, das ferner Mittel (27) zum Vergrößern der wirksamen Länge des Ballenhalters (18) aufweist.

25. Ballenhandhabungsgerät nach Anspruch 24, das ein Gleitschienenelement (96) aufweist, welches lösbar außerhalb der Ballenhaltefläche positioniert werden kann.

26. Ballenhandhabungsgerät nach Anspruch 25, bei dem das Gleitschienenelement (96) schwenkbar angebracht ist.

27. Ballenhandhabungsgerät nach einem der vorhergehenden Ansprüche, das feiner ein Schüttelmittel (134) zum Aufbrechen und/oder Vorwärtstreiben von Teilen eines Ballens aufweist, wenn sie von dem Ballenhalter (112) verschoben werden.

28. Ballenhandhabungsgerät nach Anspruch 27, bei dem das Schüttelmittel (112) in den Weg eines Ballen hinein und aus diesem heraus verschiebbar ist.

29. Ballenhandhabungsgerät nach Anspruch 27 oder Anspruch 28, bei dem das Schüttelmittel (112) ein drehbares Element (140, 142) mit vorstehenden Teilen (144) aufweist.

30. Ballenhandhabungsgerät nach einem der Ansprüche 27 bis 29, das ferner eine Mehrzahl von Schüttelmitteln (134) aufweist.

31. Ballenhandhabungsgerät nach Anspruch 30, das ein erstes Schüttelmittel (134), ausgelegt zum Ergreifen des oberen Teils eines Ballens, und ein zweites Schüttelmittel (134) umfasst, das zum Ergreifen des unteren Teils eines Ballens ausgelegt ist.

32. Ballenhandhabungsgerät nach einem der vorhergehenden Ansprüche, das ferner Mittel (146) zum Führen von von dem Ballenhalter verschobenem Material aufweist.

33. Ballenhandhabungsgerät nach Anspruch 32, das ferner ein Förderband (146) angeordnet angrenzend an das Abgabeende des Ballenhalters aufweist.

34. Ballenhandhabungsgerät nach Anspruch 33, bei dem die Bewegungsrichtung des Förderbands (146) quer zu der Bewegungsrichtung des Ballens ist.

35. Ballenhandhabungsgerät nach Anspruch 33 oder Anspruch 34, bei dem das Förderband (146) in zwei Richtungen betrieben werden kann.

36. Ballenhandhabungsgerät nach einem der Ansprüche 33 bis 35, bei dem das Förderband (146) ein Endlosförderband aufweist.

37. Ballenhandhabungsgerät nach einem der vorhergehenden Ansprüche, bei dem das Gerät (10) hydraulisch betätigt wird.

38. Ballenhandhabungsgerät nach einem der vorhergehenden Ansprüche, bei dem das Befestigungsmittel (28) für die Befestigung an Hubmitteln an dem entgegengesetzten Ende des Ballenhalters von der Öffnung zum Beladen und Endladen des Ballens angeordnet ist.

## Revendications

1. Dispositif de manutention de balles (10) comprenant une section en U de réception de balles possédant une base (18) définie par un support de balles destiné à un engagement avec la surface inférieure d'une balle (16) et deux parois latérales opposées (20) dont chacune est positionnée de part et d'autre du support de balles, une extrémité ouverte (24) qui est définie entre les parois latérales opposées au niveau d'une extrémité du support de balles pour charger et décharger une balle, un moyen de déplacement (70) pour déplacer la balle selon une manière contrôlée et dégager la balle du support de balles et l'amener hors de la section en U de réception de balles à travers ladite extrémité ouverte (24), et un moyen de fixation (28) pour permettre la fixation sur un dispositif de levage (12) d'un véhicule.

2. Dispositif de manutention de balles, selon la revendication 1, dans lequel le moyen de déplacement de balles (70) comporte un élément mobile qui s'engage avec une face d'extrémité de la balle.

3. Dispositif de manutention de balles, selon la revendication 2, dans lequel l'élément mobile (70) comprend un corps généralement plane.

4. Dispositif de manutention de balles, selon la revendication 3, dans lequel le corps plane comporte une paroi ou une grille mobile (70).

5. Dispositif de manutention de balles, selon l'une quelconque des revendications 2 à 4, dans lequel le moyen de déplacement de balles comporte en outre un ou plusieurs entraînements par vis sans fin (124) servant à déplacer l'élément mobile.

6. Dispositif de manutention de balles, selon la revendication 5, comprenant deux entraînements par vis sans fin (124) qui sont positionnés sur les côtés opposés du dispositif.

7. Dispositif de manutention de balles, selon la revendication 1, dans lequel le moyen de déplacement de balles comporte des moyens (36, 40) servant à maintenir de façon fixe une extrémité coupée d'une ou de plusieurs ligatures de balles (48) et à tirer l'autre extrémité de la ligature de balle ou de chaque ligature de balle.

8. Dispositif de manutention de balles, selon la revendication 7, dans lequel l'extrémité libre de la ligature ou de chaque ligature (48) peut être enroulée sur un élément de tambour rotatif mené (36).

9. Dispositif de manutention de balles, selon la revendication 7, dans lequel l'extrémité libre de la ligature ou de chaque ligature peut être fixée de façon amovible sur l'une d'une série de barres de serrage (60) faisant partie d'un équipement convoyeur (50).

10. Dispositif de manutention de balles, selon l'une quelconque des revendications précédentes, dans lequel le support de balles comporte une plaque essentiellement lisse (18) sur laquelle la balle peut glisser.

11. Dispositif de manutention de balles, selon l'une quelconque des revendications 1 à 9, dans lequel le support de balles comporte une pluralité d'éléments de support (112) qui sont espacés les uns des autres.

12. Dispositif de manutention de balles, selon la revendication 11, dans lequel les éléments de support (112) s'étendent dans le sens de déplacement de la balle.

13. Dispositif de manutention de balles, selon l'une quelconque des revendications 1 à 9, dans lequel le support de balles (18) est mobile afin de déplacer une balle soutenue par celui-ci.

14. Dispositif de manutention de balles, selon la revendication 13, dans lequel le support de balles comprend la surface supérieure d'un équipement convoyeur (76).

15. Dispositif de manutention de balles, selon la revendication 14, dans lequel l'équipement convoyeur (76) est capable de fonctionner dans deux sens.

16. Dispositif de manutention de balles, selon l'une quelconque des revendications précédentes, dans lequel la section en U de réception de balles est allongée.

17. Dispositif de manutention de balles, selon la revendication 16, dans lequel l'axe longitudinal de la section en U de réception de balles est transversal par rapport au sens de marche Avant d'un véhicule (14) sur lequel il est monté.

18. Dispositif de manutention de balles, selon la revendication 16, dans lequel l'axe longitudinal de la section en U de réception de balles est parallèle par rapport au sens de marche Avant d'un véhicule de support (14) sur lequel il est monté.

19. Dispositif de manutention de balles, selon la revendication 16, dans lequel le dispositif (10) est réglable entre une première position (Fig. 8A) dans laquelle l'axe longitudinal de la section en U de réception de balles est parallèle par rapport au sens de marche Avant d'un véhicule de support (14) sur lequel il est monté, et une deuxième position (Fig. 8D) dans laquelle l'axe longitudinal de la section en U de réception de balles est transversal par rapport au sens de marche Avant du véhicule de support (14).

20. Dispositif de manutention de balles, selon l'une quelconque des revendications précédentes, comprenant en outre une paroi (22) au niveau d'une extrémité de la section en U, ainsi qu'une ouverture de décharge (24) située sur l'extrémité opposée.

21. Dispositif de manutention de balles, selon l'une quelconque des revendications précédentes, dans lequel les bords (44) des parois latérales (20), qui sont adjacents à la paroi à extrémité ouverte (24), sont biseautés.

22. Dispositif de manutention de balles, selon l'une quelconque des revendications précédentes, dans lequel le support de balles (18) est allongé.

23. Dispositif de manutention de balles, selon l'une quelconque des revendications précédentes, comprenant en outre un moyen de fixation permettant le raccordement à un véhicule.

24. Dispositif de manutention de balles, selon l'une quelconque des revendications précédentes, comprenant en outre un moyen (27) destiné à augmenter la longueur réelle du support de balles (18).

25. Dispositif de manutention de balles, selon la revendication 24, comprenant un élément coulissant (96) qui peut être positionné de façon détachable au-delà de la surface de support de balles.

26. Dispositif de manutention de balles, selon la revendication 25, dans lequel l'élément coulissant (96) est monté de façon pivotante.

27. Dispositif de manutention de balles, selon l'une quelconque des revendications précédentes, comprenant en outre un moyen d'agitation (134) servant à séparer des sections d'une balle et/ou à leur donner une impulsion au fur et à mesure qu'elles sont dégagées du support de balles (112).

28. Dispositif de manutention de balles, selon la revendication 27, dans lequel le moyen d'agitation (112) peut être déplacé pour se trouver dans le parcours d'une balle, ou hors du parcours d'une balle.

29. Dispositif de manutention de balles, selon la revendication 27 ou la revendication 28, dans lequel le moyen d'agitation (112) comprend un élément rotatif (140, 142) possédant des projections en saillie (144).

30. Dispositif de manutention de balles, selon l'une quelconque des revendications 27 à 29, comprenant en outre une pluralité de moyens d'agitation (134).

31. Dispositif de manutention de balles, selon la revendication 30, comprenant un premier moyen d'agitation (134) qui est adapté pour s'engager avec la section supérieure d'une balle et un deuxième moyen d'agitation (134) qui est adapté pour s'engager avec la section inférieure d'une balle.

32. Dispositif de manutention de balles, selon l'une quelconque des revendications précédentes, comprenant en outre un moyen (146) permettant de diriger le matériau qui est dégagé à partir du support de balles.

33. Dispositif de manutention de balles, selon la revendication 32, comprenant en outre un convoyeur (146) qui est positionné de façon adjacente à l'extrémité de décharge du support de balles.

34. Dispositif de manutention de balles, selon la revendication 33, dans lequel le sens de mouvement du convoyeur (146) est transversal par rapport au sens de mouvement de la balle.

35. Dispositif de manutention de balles, selon la revendication 33 ou la revendication 34, dans lequel le convoyeur (146) est capable de fonctionner dans deux sens.

36. Dispositif de manutention de balles, selon l'une quelconque des revendications 33 à 35, dans lequel le convoyeur (146) comprend un convoyeur sans fin.

37. Dispositif de manutention de balles, selon l'une quelconque des revendications précédentes, dans lequel le dispositif (10) a un actionnement hydraulique.

38. Dispositif de manutention de balles, selon l'une quelconque des revendications précédentes, dans lequel le moyen de fixation (28), servant à la fixation sur un moyen de levage, est positionné au niveau de l'extrémité opposée du support de balles par rapport à l'ouverture permettant de charger et de décharger la balle.
